(19) Europäisches Patentamt
European Patent Office
Office européen des brevets

(11) Numéro de publication: **0 042 346**
**B1**

(12) # FASCICULE DE BREVET EUROPEEN

(45) Date de publication du fascicule du brevet: **02.11.83**

(51) Int. Cl.³: **H 01 M 14/00**

(21) Numéro de dépôt: **81400961.9**

(22) Date de dépôt: **16.06.81**

(54) **Cellule photogalvanique, utilisable notamment pour convertir l'énergie solaire en énergie électrique.**

(30) Priorité: **18.06.80 FR 8013543**

(43) Date de publication de la demande:
**23.12.81 Bulletin 81/51**

(45) Mention de la délivrance du brevet:
**02.11.83 Bulletin 83/44**

(84) Etats contractants désignés:
**BE DE GB IT NL**

(56) Documents cités:
**WO - A - 80/00353**
**US - A - 3 255 044**
**US - A - 3 255 046**
**US - A - 3 401 062**

**ELECTROCHIMICA ACTA, vol. 21, no. 12, 1976 Pergamon Press (GB) W.J. ALBERY et al.: "Photogalvanic Cells-I. The Potential of Zero Current", pages 1155-1163**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Folcher, Gérard, 40, Allée de Persepolis, F-91400 Orsay (FR)**
Inventeur: **Paris, Jacques, 35, rue du Général de Gaulle, F-91440 Bures sur Yvette (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

# Cellule photogalvanique, utilisable notamment pour convertir l'énergie solaire en énergie électrique

La présente invention a pour objet une cellule photogalvanique, utilisable notamment pour convertir l'énergie solaire en énergie électrique.

Depuis quelques années, de nombreuses recherches se sont portées sur des dispositifs permettant de récupérer l'énergie solaire sous la forme d'énergie thermique ou électrique. A la suite de ces recherches, on a mis au point des cellules photogalvaniques qui permettent de transformer l'énergie lumineuse du soleil en force électromotrice. Ces cellules comprennent deux électrodes placées dans un liquide contenant un ou plusieurs systèmes oxydoréducteurs dont une espèce photosensible, constituée par exemple par un colorant tel que la thionine. Dans ces cellules, l'une des électrodes est éclairée par un faisceau lumineux tandis que l'autre électrode reste dans l'obscurité. L'absorption du rayonnement visible par l'espèce photosensible permet d'engendrer dans le liquide des réactions d'oxydoréduction qui conduisent à l'apparition d'une différence de potentiel aux électrodes de la cellule, qui peut ainsi fournir du courant électrique sans consommer pour autant ni les différents constituants du liquide ni les électrodes. Lorsque l'espèce photosensible est la thionine, le liquide contient habituellement un système oxydoréducteur relais, constitué soit par le couple $Fe^{2+}/Fe^{3+}$, soit par un constituant organique tel que l'hydroquinone.

Cependant, de telles cellules ne permettent pas d'obtenir des rendements de conversion satisfaisants. En effet, les tensions obtenues sont généralement inférieures à 300 mV et les puissances sont au plus de l'ordre de quelques dizaines de $\mu W/cm^2$. De plus, lorsque le système relais est un constituant organique, le liquide n'est plus stable après quelques minutes. En revanche, avec des systèmes relais constitués par $Fe^{2+}/Fe^{3+}$, on obtient une bonne stabilité, mais dans ce cas la puissance de la cellule ne dépasse pas 1 $\mu W/cm^2$.

La présente invention a précisément pour objet une cellule photogalvanique qui présente des propriétés améliorées par rapport aux cellules connues actuellement.

La cellule photogalvanique selon l'invention comprend deux électrodes disposées dans un système liquide comprenant un constituant photosensible, et elle se caractérise en ce que ledit constituant photosensible est l'ion uranyle $UO_2^{2+}$.

Grâce à l'utilisation de cet ion uranyle, la cellule photogalvanique de l'invention présente en particulier l'avantage de conduire à de meilleurs rendements de conversion. En effet, lorsque l'ion uranyle $UO_2^{2+}$ est porté dans un état excité par absorption d'un photon, il se transforme en une espèce fortement oxydante $UO_2^{2+*}$ qui peut être ensuite réduite en $UO_2^+$, l'énergie potentiellement captée par l'ion uranyle lors de cette transformation étant de 2,6 eV, ce qui constitue une énergie importante que l'on peut récupérer ensuite sous forme électrochimique avec de bons rendements de conversion. Ainsi, par rapport au couple $UO_2^{2+}/UO_2^+$ dont le potentiel d'oxydoréduction est de 0,06 V par rapport à l'électrode normale à hydrogène (ENH), le couple $UO_2^{2+*}/UO_2^+$ présente un potentiel d'oxydoréduction beaucoup plus élevé qui est d'environ 2,6 V par rapport à ENH.

De plus, l'ion uranyle $UO_2^{2+}$ est capable d'absorber dans le domaine des longueurs d'ondes du spectre solaire, ce qui le rend avantageux pour une utilisation dans des cellules photogalvaniques pour la transformation de l'énergie solaire en courant électrique. Enfin, il présente une stabilité à la lumière plus grande que celle de la plupart des colorants utilisés jusqu'à présent.

Selon l'invention, on utilise les propriétés fortement oxydantes de l'ion $UO_2^{2+*}$ pour engendrer dans le système liquide une espèce oxydée $A_{ox}$ qui stocke l'énergie.

Aussi, selon l'invention, le système liquide comprend avantageusement un second constituant $A_{réd}$ capable de réduire l'ion uranyle $UO_2^{2+*}$ et de se transformer en l'espèce oxydée $A_{ox}$, c'est-à-dire un constituant $A_{réd}$ dont le potentiel d'oxydoréduction du couple $A_{réd}/A_{ox}$ est inférieur à 2,6 V par rapport à ENH.

Dans ce cas, on suppose que le fonctionnement de la cellule correspond aux réactions suivantes:

a) dans le système liquide éclairé par le faisceau lumineux

$$UO_2^{2+} + h\nu \rightarrow UO_2^{2+*}$$

$$UO_2^{2+*} + A_{réd} \rightarrow UO_2^+ + A_{ox}$$

b) sur l'électrode éclairée

$$UO_2^+ \rightarrow UO_2^{2+} + e^- \text{ avec } \Delta E_{o\,UO_2^{2+}/UO_2^+}$$

c) sur l'autre électrode éclairée ou non éclairée

$$A_{ox} + e^- \rightarrow A_{réd} \text{ avec } \Delta E_{o\,A_{réd}/A_{ox}}$$

ce qui se traduit par l'apparition d'une différence de potentiel entre les électrodes si

$$E_{o\,A_{réd}/A_{ox}} > E_{o\,UO_2^{2+}/UO_2^+}$$

Dans ce système, l'énergie prélevée sur la lumière est de 2,6 eV et les pertes théoriques sont calculées à partir de la différence:

$$E_{UO_2^{2+*}/UO_2^+} - E_{A_{réd}/A_{ox}}$$

Aussi est-il avantageux de choisir comme second constituant $A_{réd}$ un constituant tel que le potentiel d'oxydoréduction du couple $A_{réd}/A_{ox}$ soit le plus proche possible du potentiel d'oxydoréduction du couple $UO_2^{2+*}/UO_2^+$, soit 2,6 V par rapport à ENH.

De préférence, le second constituant $A_{réd}$ est tel que le potentiel d'oxydoréduction du couple $A_{réd}/A_{ox}$ soit supérieur à 1 V.

Par ailleurs, il est nécessaire que le second constituant $A_{réd}$ soit tel que l'espèce oxydée $A_{ox}$ ne réagisse pas rapidement avec les autres constituants du système liquide, notamment le solvant,

ou qu'elle réagisse pour donner une espèce encore très oxydante, ayant de préférence un potentiel d'oxydoréduction supérieur à 1 V par rapport à l'électrode normale à hydrogène (ENH).

Selon l'invention, le second constituant $A_{réd}$ peut être un cation ou un anion.

Parmi les cations susceptibles d'être utilisés, on peut citer l'ion $Ce^{3+}$, qui présente des propriétés satisfaisantes, car le potentiel d'oxydoréduction du couple $Ce^{3+}/Ce^{4+}$ est de 1,7 V par rapport à une électrode normale à hydrogène. On peut également utiliser $Fe^{2+}$ qui est très stable, mais qui est moins intéressant, car le potentiel d'oxydoréduction du couple $Fe^{2+}/Fe^{3+}$ n'est que de 0,6 V. Lorsque le second constituant est un cation, l'ion uranyle est introduit dans le système liquide sous forme de complexe comportant des ligands fixés par des liaisons de type Lewis, tels que la pyridine, la phénantroline, le dicyanoéthane. Avantageusement, on utilise comme complexe $UO_2(NO_3)_2$ bipyridyl.

Lorsque le second constituant $A_{red}$ est constitué par un anion, il faut que cet anion soit susceptible de se lier à l'ion uranyle et qu'il produise par oxydation un radical $A_{ox}$ capable soit de se décharger directement sur l'une des électrodes, soit de réagir dans le système liquide pour donner une espèce susceptible de se décharger sur l'une des électrodes.

A titre d'anions susceptibles d'être utilisés, on peut citer $NO_3^-$, $SCN^-$, $Cl^-$, $Br^-$ et $I^-$.

Lorsque le second constituant est constitué par un anion qui se transforme par oxydation en un radical capable de réagir avec un troisième constituant du système liquide pour donner une espèce susceptible de se décharger sur l'électrode, il faut de plus que ce radical ait une durée de vie suffisante pour lui permettre de réagir avec ce troisième constituant. De même, lorsque le second constituant est constitué par un cation ou par un anion qui se transforme par oxydation en un cation oxydé ou en un radical susceptible de se décharger directement sur l'électrode, il faut que ce radical ou ce cation oxydé ait une durée de vie suffisante lui permettant d'arriver à l'électrode ou de se transformer en une espèce assez stable pour arriver à l'électrode.

Avantageusement, le système liquide comprend de l'eau, et le second constituant est un anion capable de se lier à l'ion uranyle et de se transformer par oxydation en un radical susceptible de réagir dans le système liquide pour former de l'eau oxygénée.

Selon l'invention, le système liquide comprend un solvant dans lequel sont dissous le premier et le second constituant. Ce solvant doit être le plus inerte possible, notamment ne pas réagir avec l'ion $UO_2^+$ et avec le second constituant $A_{réd}$, ce qui conduirait à la formation de nouveaux produits dont la présence est néfaste pour obtenir la réversibilité du système. Ainsi, lorsqu'on utilise comme second constituant l'anion $NO_3^-$, l'eau ne peut être utilisée seule comme solvant. A titre de solvant susceptible d'être utilisé, on peut citer l'acétonitrile.

Dans le cas d'un système liquide comprenant comme second constituant l'anion $SCN^-$, on peut utiliser le diméthylsulfoxyde comme solvant à condition de lui ajouter une faible quantité d'eau et d'élever la température de 20° C par rapport à la température ambiante au démarrage afin d'obtenir une viscosité appropriée.

Dans certains cas, pour améliorer le transfert de charge vers les électrodes, on ajoute au solvant un transporteur d'ions, par exemple un perchlorate de tétraalkylammonium tel que le perchlorate de tétraéthylammonium. On peut également ajouter au solvant d'autres additifs, par exemple du chloroforme, pour améliorer la stabilité à la lumière de systèmes liquides dans lesquels le second constituant est un anion, par exemple le système liquide constitué par du nitrate d'uranyle en solution dans l'acétonitrile.

En effet, on a constaté que lorsqu'on laissait à la la lumière, dans une cellule fermée, une solution de nitrate d'uranyle 0,2M dans l'acétonitrile, il se formait au bout de quelques heures un précipité qui peut être redissous par addition d'un acide minéral, mais cette addition d'acide est néfaste pour obtenir un fonctionnement satisfaisant de la cellule photogalvanique. En revanche, lorsqu'on ajoute préalablement au solvant du chloroforme, par exemple 0,1 $cm^3$ pour 5 $cm^3$ de solution, on évite la formation de ce précipité et on peut ainsi obtenir un fonctionnement satisfaisant de la cellule.

Dans tous les cas, il est préférable de limiter la teneur en eau du système liquide pour éviter les réactions parasites; cependant, dans les systèmes où le second constituant est un anion lié à l'uranyle, la teneur en eau doit se situer au voisinage de celle qui correspond à l'eau de constitution du nitrate d'uranyle.

Selon l'invention, le choix des électrodes de la cellule a également de l'importance. En effet, pour obtenir un fonctionnement satisfaisant, il est nécessaire que ces électrodes soient réversibles, assurent les transferts électroniques le plus rapidement possible, qu'elles soient chimiquement inactives, aient une surtension aussi faible que possible et une résistance ohmique minimale. Elles peuvent être réalisées en métaux précieux, par exemple en platine poli pour l'électrode éclairée. Pour l'autre électrode, on peut utiliser une substance conductrice chimiquement inerte telle qu'un oxyde conducteur, du graphite ou un métal précieux. Lorsque cette autre électrode est en métal précieux, elle ne doit pas recevoir de lumière, ce qui peut être obtenu en la disposant dans l'ombre de l'électrode éclairée. Avantageusement, l'électrode éclairée est en platine poli et l'autre électrode, qui peut être éclairée ou non, est en graphite poreux, ce qui permet d'augmenter la surface de cette électrode et d'élever la valeur du courant limite. En effet, on a constaté qu'un accroissement de 30% de la porosité microscopique de l'électrode en graphite permet de doubler le rendement de la cellule.

Dans la cellule de l'invention, l'épaisseur du milieu liquide devant l'électrode éclairée constitue

un paramètre important, car elle détermine l'efficacité de la cellule. La détermination de l'épaisseur optimale dépend de plusieurs éléments. D'une part, elle doit permettre d'obtenir une absorption d'énergie maximale. Cependant, plusieurs facteurs militent en faveur d'une épaisseur faible: l'espèce réduite $UO_2^+$ doit être réoxydée le plus rapidement possible avant dismutation qui conduirait à la formation d'U(IV); d'autre part, la nature des radicaux formés est telle que leur accumulation dans une zone limitée est indispensable à la bonne marche de la pile.

Pratiquement, il convient de déterminer l'épaisseur optimale dans chaque cas en fonction de l'intensité du flux lumineux, de la concentration en uranyle et de la température de fonctionnement.

Avec une concentration en $UO_2^{2+}$ de $0{,}2M \cdot 1^{-1}$, un flux lumineux issu d'une lampe de 500 W, une température de fonctionnement d'environ 45° C, un volume de solution de 30 $cm^3$, une surface de l'électrode éclairée en platine poli de 10 $cm^2$ et une électrode en graphite poreux de type commercial, une épaisseur de 0,1 à 0,5 mm peut être utilisée.

D'autres caractéristiques et avantages de l'invention apparaîtront mieux à la lecture de la description qui suit, donnée bien entendu à titre illustratif et non limitatif, se référant aux dessins annexés sur lesquels:

la fig. 1 représente en coupe verticale une cellule photogalvanique selon l'invention;

la fig. 2 est une présentation schématique d'un montage pour la mesure de la puissance et du rendement d'une cellule selon l'invention;

la fig. 3 est un diagramme représentant les variations de la puissance délivrée par différentes cellules selon l'invention, en fonction de la tension délivrée par ces cellules;

la fig. 4 est un diagramme représentant les variations du rendement quantique R d'une cellule selon l'invention, en fonction de la longueur d'onde λ et de la puissance du faisceau lumineux incident (courbes I et II), le spectre d'absorption d'une solution de nitrate d'uranyle (courbe III), le spectre solaire (courbe IV) et les variations du rendement quantique d'une cellule photovoltaïque au silicium en fonction de la longueur d'once (courbe V);

la fig. 5 est un diagramme représentant les variations de la puissance délivrée par une cellule selon l'invention en fonction de la concentration en uranyle du système liquide, et

la fig. 6 illustre le couplage d'une cellule photogalvanique selon l'invention avec une cellule photovoltaïque.

En se reportant à la fig. 1, on voit que la cellule selon l'invention comprend un boîtier étanche 1 dont la paroi supérieure 3 est réalisée en matériau transparent, par exemple en verre, ce boîtier étant rempli d'un système liquide 5 dans lequel sont disposées deux électrodes 7 et 9 montées parallèlement à la face d'entrée du faisceau lumineux (schématisé par les flèches F) et maintenues en place par deux jeux de cales isolantes 11 et 13. Dans cette cellule, les électrodes sont ainsi agencées de façon que l'électrode 9 soit dans l'ombre de l'électrode 7. L'électrode 7 est réalisée en platine poli et percée de trous de façon à permettre le passage des espèces oxydées, et elle est maintenue à une distance déterminée de la paroi supérieure 3 de la cellule par le jeu de cales 11. L'électrode 9 est réalisée en graphite tel que celui utilisé pour les piles commerciales. Des sorties 15 et 17 reliées respectivement aux électrodes 7 et 9 traversent de façon étanche le boîtier 1 de façon à permettre la récupération de l'énergie électrique produite dans la cellule sous l'effet du faisceau lumineux. Les exemples suivants illustrent les résultats obtenus avec différents systèmes liquides.

*Exemple 1:*

Dans cet exemple, le système liquide est constitué par de l'acétonitrile dans lequel on a introduit un complexe $UO_2(NO_3)_2$ bipiridyl à une concentration de $0{,}1M \cdot 1^{-1}$ et du cérium III à une concentration de $0{,}1M \cdot 1^{-1}$. On précise que le cérium III est obtenu par attaque d'un barreau de cérium métallique au moyen d'une solution d'acide chlorhydrique 12N. Par ailleurs, le pH du système liquide est ajusté par addition d'acide chlorhydrique de façon que les constituants soient solubles.

On vérifie les résultats obtenus avec une cellule comprenant ce système liquide en utilisant le dispositif représenté schématiquement sur la fig. 2, dans lequel les sorties électriques 15 et 17 de la cellule 10 sont reliées à une résistance variable 19 et à un ampèremètre 21, le dispositif comportant de plus un voltmètre 23 monté entre les bornes de la cellule pour mesurer la tension délivrée par cette dernière lorsqu'on l'éclaire par un faisceau lumineux.

Les résultats obtenus avec cette cellule sont donnés sur la courbe A de la fig. 3 qui représente les variations de la puissance délivrée par la cellule (en microwatts par centimètre carré) en fonction de la tension (en volts) aux bornes de la cellule. Au vu de cette figure, on voit que la puissance fournie par cette cellule est faible, mais qu'elle est déjà comparable à celle que l'on peut obtenir avec des cellules connues utilisant par exemple comme système liquide le système fer ferreux-thionine.

*Exemple 2:*

Dans cet exemple, on utilise comme système liquide une solution $1{,}5 \cdot 10^{-1}$ molaire de $UO_2(NO_3)_2 \cdot 6H_2O$ dans l'acétonitrile, avec une épaisseur de liquide entre l'électrode 5 et la paroi supérieure 3 en verre de la cellule inférieure à 0,5 mm. On détermine les résultats obtenus avec cette cellule en utilisant également le montage représenté sur la fig. 2. Les résultats obtenus sont illustrés sur la courbe B de la fig. 3 qui montre que les puissances obtenues sont supérieures à celles de l'exemple 1. Ainsi, on peut obtenir une puissance maximale d'environ 120 $\mu W/cm^2$ pour une tension de l'ordre de 0,4 V. Sur la fig. 3, la courbe C illustre les résultats obtenus avec cette cellule lorsque le système liquide a une concentration en nitrate d'uranyle de $0{,}075M \cdot 1^{-1}$. Par

ailleurs, on a vérifié que ce système liquide est stable pendant plusieurs dizaines d'heures, dans un domaine de 10%, c'est-à-dire que la tension moyenne fluctue de $\pm 5\%$. Cependant, cette stabilité peut être améliorée en ajoutant au système liquide 0,1 $cm^3$ de chloroforme pour 5 $cm^3$ de solution. On mesure également le rendement quantique apparent R de cette cellule, qui est exprimé par le rapport entre la puissance fournie à la cellule (en microwatts par centimètre carré) et la puissance délivrée par cette dernière (en microwatts par centimètre carré) en fonction de la longueur d'onde, en utilisant soit une lampe à filament de faible puissance (300 W), soit une lampe UV à vapeur de mercure d'une puissance de 1000 W. Dans les deux cas, la lumière émise par la lampe traverse un monochromateur pour faire défiler le spectre et elle est ensuite envoyée sur l'électrode 7 de platine.

Les résultats obtenus sont donnés sur la fig. 4 qui représente le rendement quantique apparent R en fonction de la longueur d'onde $\lambda$ (en nanomètres) du faisceau lumineux incident. Sur cette figure, la courbe I illustre les résultats obtenus avec la lampe à filament et la courbe II illustre les résultats obtenus avec la lampe à vapeur de mercure. Sur cette fig. 4, on a représenté également le spectre d'absorption (courbe III) de la solution de nitrate d'uranyle, soit l'absorbance A en fonction de la longueur d'onde.

Au vu de cette figure, on constate que le rendement quantique apparent est le plus important pour des longueurs d'onde comprises entre 400 et 450 nm, ce qui montre bien que c'est la lumière absorbée par l'ion $UO_2^{2+}$ dans la région 400-450 nm du spectre qui est transformée en énergie électrique.

On étudie également l'influence de la concentration en nitrate d'uranyle du système liquide en mesurant la puissance délivrée par la cellule en fonction de la concentration en uranyle du système liquide. Les résultats obtenus sont donnés sur la fig. 5 qui représente les variations de la puissance délivrée par la cellule (en microwatts par centimètre carré) en fonction de la concentration en uranyle (en $M \cdot l^{-1}$).

Au vu de cette figure, on constate que la puissance augmente pratiquement linéairement jusqu'à 0,1 $M \cdot l^{-1}$ et qu'elle passe par un maximum pour devenir ensuite à peu près constante vers 0,5$M \cdot l^{-1}$.

Enfin on mesure, indépendamment, en présence d'éclairage, les potentiels des électrodes de cette cellule par rapport à l'électrode de Plestkov, ce qui laisse supposer que le mécanisme de fonctionnement de la cellule est le suivant:

$$UO_2^{2+} + \lambda\nu \rightarrow UO_2^{2+*}$$

$$UO_2^{2+*} + NO_3^- \rightarrow NO_3^{\cdot} + UO_2^+$$

$$UO_2^+ \rightarrow UO_2^{2+} + e^- \quad 0{,}06V/ENH$$

$$NO_3^{\cdot} + H_2O \rightarrow NO_3^- + OH^{\cdot}$$

$$OH^{\cdot} \rightarrow \tfrac{1}{2}H_2O_2$$

$$\tfrac{1}{2}H_2O_2 + e^- \rightarrow OH^- \quad 0{,}68V/ENH$$

$$OH^- + H^+ \rightarrow H_2O$$

Les cellules photogalvaniques de l'invention présentent ainsi de meilleures performances que les cellules connues. En effet, les tensions délivrées peuvent être de 500 mV alors qu'elles sont en général inférieures à 300 mV avec les cellules connues, et les puissances délivrées peuvent être d'une centaine de microwatts par centimètre carré, alors qu'elles sont limitées à quelques dizaines de microwatts par centimètre carré avec les cellules connues.

Cependant, pour une utilisation de ces cellules avec l'énergie solaire, il apparaît au vu de la fig. 4, sur laquelle la courbe IV représente le spectre solaire, que le spectre de l'uranyle ne recouvre qu'une partie (entre 10 et 20%) du spectre solaire; de ce fait, les cellules photogalvaniques de l'invention ne permettent pas une utilisation optimale de l'énergie solaire.

Aussi, pour améliorer le taux d'utilisation de l'énergie solaire, il est avantageux de coupler la cellule photogalvanique de l'invention avec une cellule photovoltaïque, telle qu'une cellule au silicium.

En effet, en se reportant à la fig. 4, sur laquelle la courbe V représente le rendement quantique d'une cellule photovoltaïque au silicium en fonction de la longueur d'onde, on voit que ces cellules sont sensibles aux longueurs d'onde où l'ion uranyle est transparent (courbe III).

La fig. 6 illustre un mode de couplage d'une cellule photogalvanique selon l'invention avec une cellule photovoltaïque.

Sur cette figure, on voit que la cellule photogalvanique 30 comprend une électrode de platine 31 légèrement concave. Ainsi, les rayons lumineux ($F_1$) non absorbés par l'uranyle du système liquide de la cellule photogalvanique sont réfléchis par l'électrode 31, et ces rayons réfléchis $F_2$ peuvent être utilisés dans la cellule photovoltaïque au silicium 33 de forme tubulaire pour engendrer de l'énergie électrique. Le branchement électrique entre la cellule photogalvanique et la cellule photovoltaïque peut être effectué soit en parallèle, soit en série, selon les besoins. Ainsi, le couplage d'une cellule photogalvanique avec une cellule photovoltaïque présente un grand intérêt, car il permet d'utiliser pratiquement toute l'énergie du spectre solaire.

## Revendications

1. Cellule photogalvanique comprenant deux électrodes (7, 9) disposées dans un système liquide (5) comprenant un premier constituant photosensible constitué par l'ion uranyle $UO_2^{2+}$ et un second constituant $A_{réd}$ capable de réduire l'ion uranyle $UO_2^{2+}$ lorsque celui-ci est porté dans un état excité $UO_2^{2+*}$ par absorption d'un photon, et de se transformer en une espèce oxydée $A_{ox}$, le second constituant $A_{réd}$ étant tel que le potentiel d'oxydoréduction du couple $A_{réd}/A_{ox}$ soit inférieur à 2,6 V par rapport à l'électrode normale à hydrogène (ENH), caractérisée en ce que le second constituant est un cation dont le potentiel

d'oxydoréduction est supérieur à 1 V par rapport à ENH ou un anion capable de se lier à l'ion uranyle, et en ce que le système liquide comprend un solvant inerte vis-à-vis de $UO_2^{+}$ et de $A_{réd}$.

2. Cellule selon la revendication 1, caractérisée en ce que le cation est $Ce^{3+}$.

3. Cellule selon la revendication 1, caractérisée en ce que le second constituant est un anion capable de se lier à l'ion uranyle et de former par oxydation un radical capable de se décharger directement sur l'une des électrodes ou de réagir dans le système liquide pour engendrer une espèce susceptible de se décharger sur l'une des électrodes.

4. Cellule selon la revendication 1, caractérisée en ce que le système liquide comprend de l'eau, et en ce que le second constituant est un anion capable de se lier à l'ion uranyle et de se transformer par oxydation en un radical susceptible de réagir dans le système liquide pour former de l'eau oxygénée.

5. Cellule selon la revendication 3, caractérisée en ce que l'anion est $NO_3^-$.

6. Cellule selon la revendication 3, caractérisée en ce que l'anion est $SCN^-$.

7. Cellule selon l'une quelconque des revendications 1 à 6, caractérisée en ce que l'une des électrodes est en platine poli et l'autre électrode est en une substance conductrice chimiquement inerte.

8. Cellule selon l'une quelconque des revendications 1 à 6, caractérisée en ce que l'une des électrodes est en platine poli et l'autre électrode est en graphite.

9. Cellule selon la revendication 1, caractérisée en ce que le système liquide est constitué par une solution de nitrate d'uranyle $UO_2(NO_3)_2 \cdot 6H_2O$ dans l'acétonitrile.

10. Cellule selon la revendication 9, caractérisée en ce que la solution de nitrate d'uranyle dans l'acétonitrile contient du chloroforme.

11. Cellule selon la revendication 1, caractérisée en ce que le système liquide est constitué par une solution dans l'acétonitrile d'un complexe d'uranyle et d'ions $Ce^{3+}$.

12. Cellule selon la revendication 11, caractérisée en ce que le complexe d'uranyle est le complexe $UO_2(NO_3)_2$/bipiridyle.

## Claims

1. Photogalvanic cell comprising two electrodes (7, 9) disposed in a liquid system (5) comprising a first photosensitive component constituted by the uranyl ion $UO_2^{2+}$ and a second component $A_{red}$ capable of reducing the uranyl ion $UO_2^{2+}$ when the latter is transformed into an excited state $UO_2^{2+*}$ by absorbing a photon, and being itself transformed into an oxidised species $A_{ox}$, the second component $A_{red}$ being such that the redox potential of the couple $A_{red}/A_{ox}$ is below 2.6 V with reference to the standard hydrogen electrode (ENH), characterized in that the second component is a cation whose redox potential is greater than 1 V with reference to ENH, or an anion capable of bonding to the uranyl ion, and in that the liquid system comprises a solvent that is inert with respect to $UO_2^{+}$ and $A_{red}$.

2. Cell according to claim 1, characterized in that the cation is $Ce^{3+}$.

3. Cell according to claim 1, characterized in that the second component is an anion capable of bonding to the uranyl ion and of forming, on oxidation, a radical capable of discharging directly on one of the electrodes or of reacting in the liquid system to generate a species capable of discharging on one of the electrodes.

4. Cell according to claim 1, characterized in that the liquid system comprises water, and in that the second component is an anion capable of bonding to the uranyl ion and of being transformed by oxidation into a radical capable of reacting in the liquid system to form hydrogen peroxide.

5. Cell according to claim 3, characterized in that the anion is $NO_3^-$.

6. Cell according to claim 3, characterized in that the anion is $SCN^-$.

7. Cell according to any one of claims 1 to 6, characterized in that one of the electrodes is formed of smooth platinum and the other electrode is formed of a chemically inert conductive substance.

8. Cell according to any one of claims 1 to 6, characterized in that one of the electrodes is formed of smooth platinum and the other electrode is formed of graphite.

9. Cell according to claim 1, characterized in that the liquid system comprises a solution of uranyl nitrate $UO_2(NO_3)_2 \cdot 6H_2O$ in acetonitrile.

10. Cell according to claim 9, characterized in that the solution of uranyl nitrate in acetonitrile contains chloroform.

11. Cell according to claim 1, characterized in that the liquid system comprises an acetonitrile solution of an uranyl complex and $Ce^{3+}$ ions.

12. Cell according to claim 11, characterized in that the uranyl complex is the complex $UO_2(NO_3)_2$/bipyridyl.

## Patentansprüche

1. Photogalvanische Zelle mit zwei Elektroden (7, 9), die in einem Flüssigkeitssystem (5) angeordnet sind, das enthält einen lichtempfindlichen ersten Bestandteil, der aus dem Uranylion $UO_2^{2+}$ besteht, und einen zweiten Bestandteil $A_{red}$, der das Uranylion $UO_2^{2+}$ reduzieren kann, wenn dieses durch Absorption eines Photons in einen erregten Zustand $UO_2^{2+*}$ überführt worden ist, und der sich in ein oxidiertes Material $A_{ox}$ umwandeln kann, wobei der zweite Bestandteil $A_{red}$ derart ist, dass das Redoxpotential des Paares $A_{red}/A_{ox}$ unter 2,6 V liegt, bezogen auf die normale Wasserstoffelektrode (ENH), dadurch gekennzeichnet, dass es sich bei dem zweiten Bestandteil um ein Kation, dessen Redoxpotential mehr als 1 V, bezogen auf ENH, beträgt, oder um ein Anion handelt, das sich mit dem Uranylion verbinden kann, und dass das

Flüssigkeitssystem ein gegenüber $UO_2^{2+}$ und $A_{red}$ inertes Lösungsmittel enthält.

2. Zelle nach Anspruch 1, dadurch gekennzeichnet, dass es sich bei dem Kation um $Ce^{3+}$ handelt.

3. Zelle nach Anspruch 1, dadurch gekennzeichnet, dass es sich bei dem zweiten Bestandteil um ein Anion handelt, das sich mit dem Uranylion verbinden kann und das durch Oxydation einen Rest bilden kann, der sich direkt an einer der Elektroden entladen kann oder der in dem Flüssigkeitssystem reagieren kann unter Bildung eines Materials, das sich an einer der Elektroden entladen kann.

4. Zelle nach Anspruch 1, dadurch gekennzeichnet, dass das Flüssigkeitssystem Wasser enthält und dass es sich bei dem zweiten Bestandteil um ein Anion handelt, das sich mit dem Uranylion verbinden kann und das durch Oxydation in einen Rest umgewandelt werden kann, der in dem Flüssigkeitssystem reagieren kann unter Bildung von Wasserstoffperoxid.

5. Zelle nach Anspruch 3, dadurch gekennzeichnet, dass es sich bei dem Anion um $NO_3^-$ handelt.

6. Zelle nach Anspruch 3, dadurch gekennzeichnet, dass es sich bei dem Anion um $SCN^-$ handelt.

7. Zelle nach einem der Ansprüche 1 bis 6, dadurch gekennzeichnet, dass eine der Elektroden aus poliertem Platin besteht und dass die andere Elektrode aus einer chemisch inerten, elektrisch leitenden Substanz besteht.

8. Zelle nach einem der Ansprüche 1 bis 6, dadurch gekennzeichnet, dass eine der Elektroden aus poliertem Platin besteht und dass die andere Elektrode aus Graphit besteht.

9. Zelle nach Anspruch 1, dadurch gekennzeichnet, dass das Flüssigkeitssystem aus einer Lösung von Uranylnitrat $UO_2(NO_3)_2 \cdot 6H_2O$ in Acetonitril besteht.

10. Zelle nach Anspruch 9, dadurch gekennzeichnet, dass die Lösung von Uranylnitrat in Acetonitril Chloroform enthält.

11. Zelle nach Anspruch 1, dadurch gekennzeichnet, dass das Flüssigkeitssystem aus einer Lösung eines Komplexes von Uranyl und von $Ce^{3+}$ -Ionen in Acetonitril besteht.

12. Zelle nach Anspruch 1, dadurch gekennzeichnet, dass es sich bei dem Uranylkomplex um den Bipiridyl/$UO_2(NO_3)_2$-Komplex handelt.

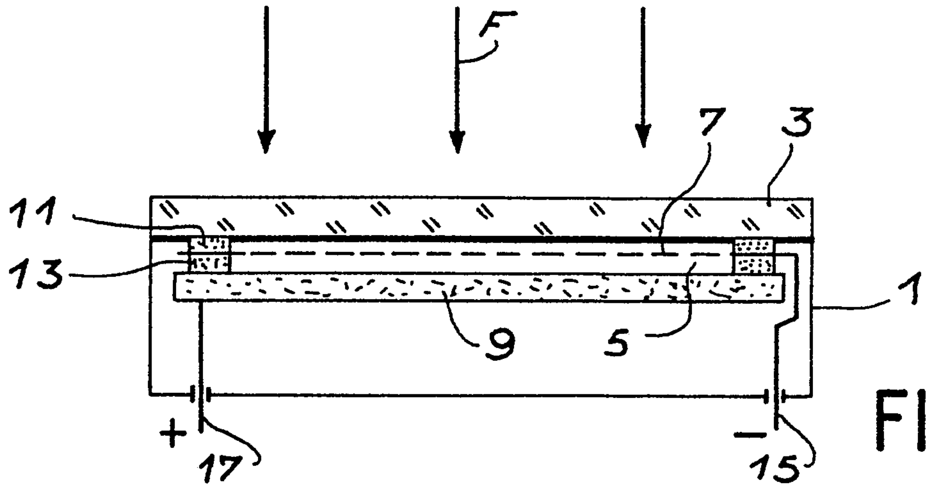


FIG.1

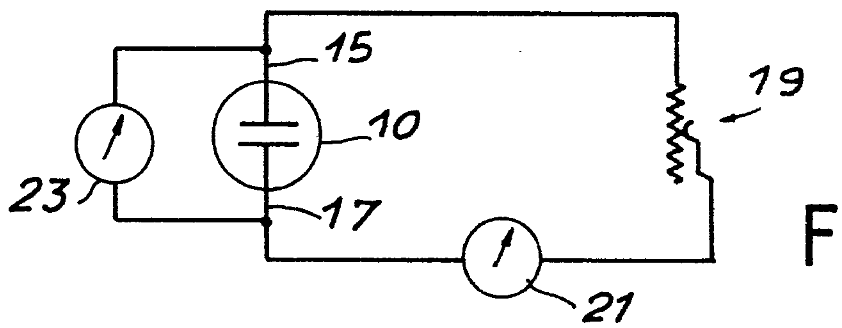


FIG.2

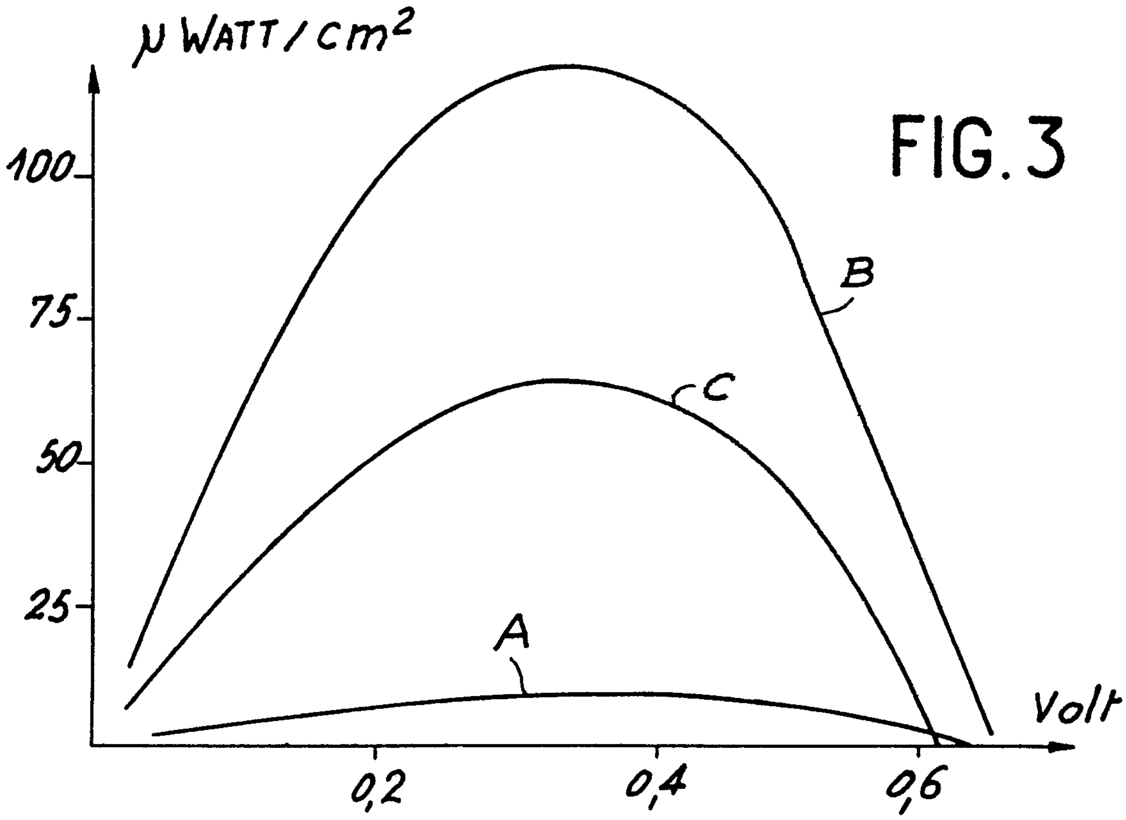


FIG.3

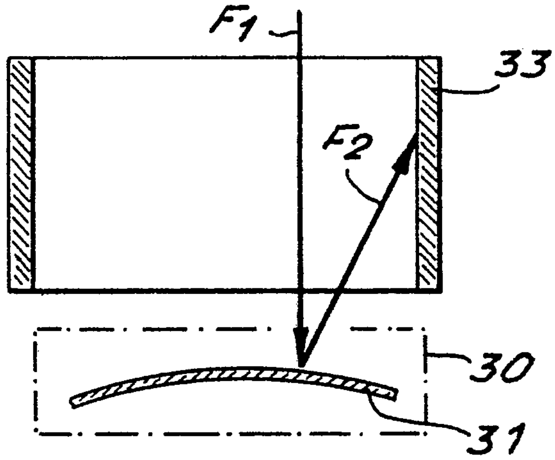


FIG.6

FIG.5

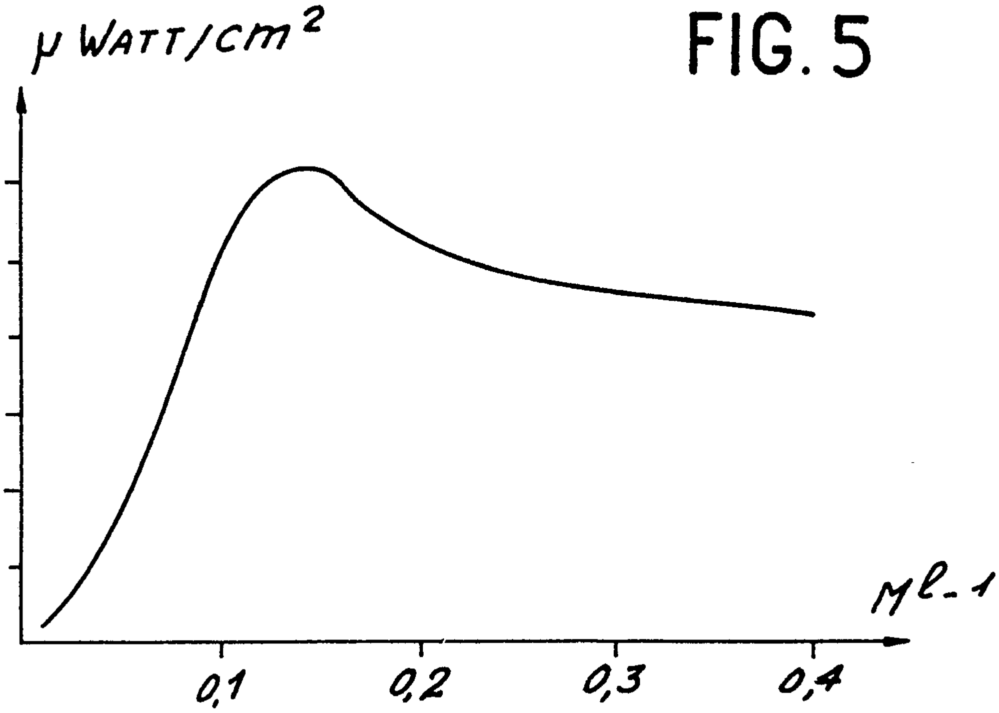

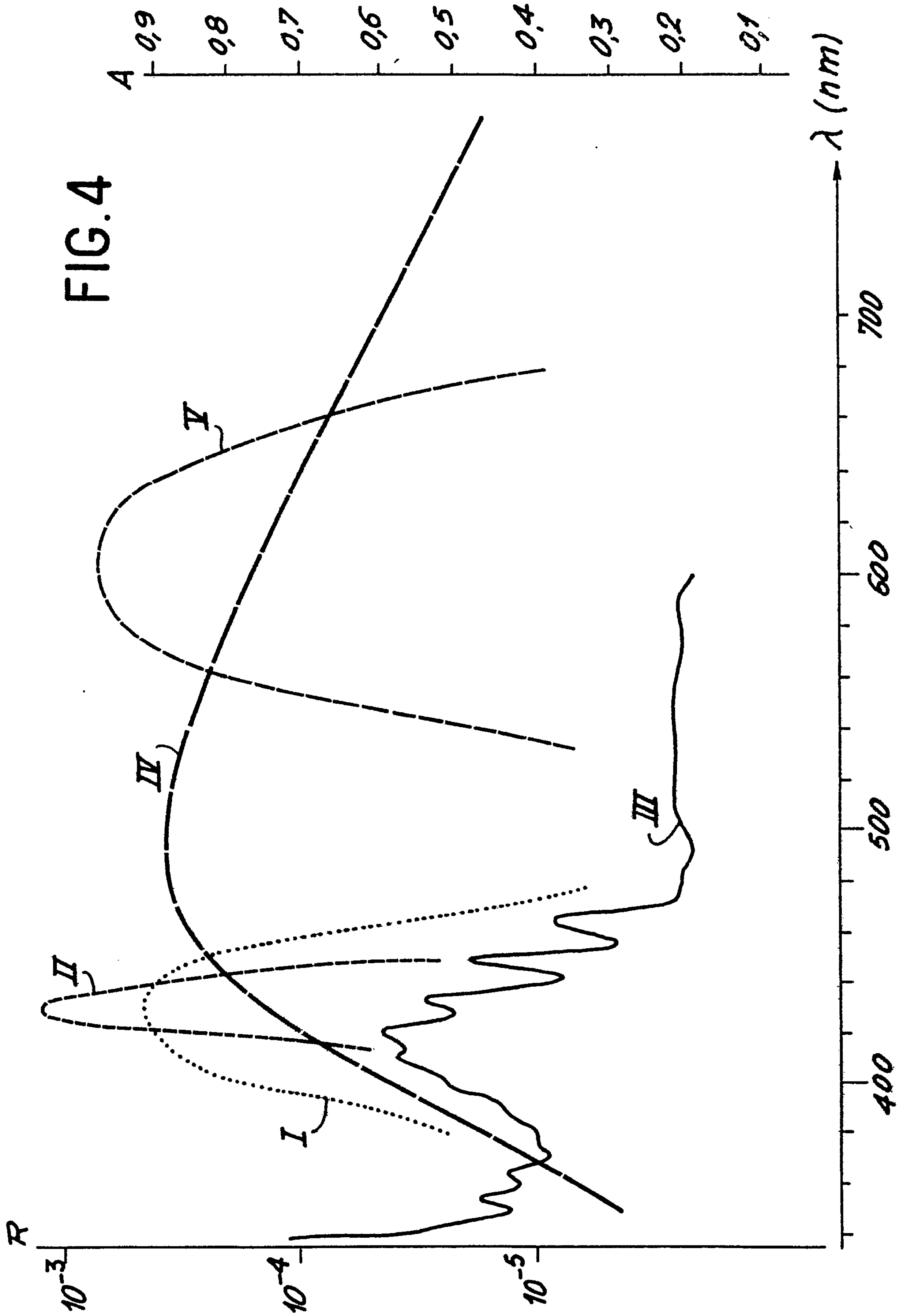
A
0,9
0,8
0,7
0,6
0,5
0,4
0,3
0,2
0,1
λ (nm)
700
600
500
400
R
$10^{-3}$
$10^{-4}$
$10^{-5}$
I
II
III
IV
V

FIG. 4